# FASCICULE DE BREVET EUROPEEN

(11) **EP 2 807 966 B1**
(45) Date de publication et mention de la délivrance du brevet: **20.03.2019**
(21) Numéro de dépôt: 14167264.2
(22) Date de dépôt: 06.05.2014
(51) Int. Cl.: A47J 36/02, A47J 27/00

(54) **Récipient de cuisson comportant une plaque de fond munie de moyens d'accroche améliorés**
Kochbehälter, der eine Bodenplatte mit verbesserten Einrastmitteln umfasst
Cooking vessel comprising a bottom plate provided with improved gripping means

(30) Priorité: 30.05.2013 FR 1354960
(43) Date de publication de la demande: 03.12.2014
(73) Titulaire: SEB S.A., 69130 Ecully (FR)
(72) Inventeur: Cuillery, Pascal, 74210 Faverges (FR)
(74) Mandataire: Bourrières, Patrice

(56) Documents cités:
- WO-A1-96/06552
- FR-A1- 2 693 894
- FR-A1- 2 919 484
- US-A- 5 711 290

## Description

La présente invention concerne un récipient de cuisson destiné à être disposé horizontalement sur une plaque de cuisson, un brûleur ou analogue pour la cuisson d'aliments notamment une poêle, une casserole, une sauteuse, un faitout ou un autocuiseur.

On connaît des documents FR2686035, FR2711050 et FR2780626 un récipient de cuisson réalisé à partir d'une feuille de métal ou d'alliage léger emboutie, comportant un fond comprenant une plaque réalisée en un métal ou alliage ayant des propriétés mécaniques, thermiques, physiques différentes et notamment une limite élastique plus élevée que celle du métal ou alliage de ladite feuille. La plaque comprend des perforations et est encastrée dans le fond par une opération de frappe de manière à ce que les perforations soient remplies de matière de la feuille. Ces perforations remplies de matière constituent des zones de maintien de la plaque sur la feuille.

Une plaque de ce type peut remplir différentes fonctions. Si la plaque est réalisée dans un matériau ferro magnétique et couvre suffisamment le fond, elle peut assurer la compatibilité du récipient de cuisson avec un appareil de chauffage par induction. La puissance de chauffe du récipient de cuisson est proportionnelle à la surface de matériau ferro magnétique disposé en vis-à-vis de l'inducteur de l'appareil de chauffage par induction et la conception de l'insert résulte d'un compromis entre la surface de la plaque et la surface des perforations. La plaque peut assurer uniquement une fonction anti-déformation. Pendant la chauffe, le fond du récipient de cuisson se bombe et la plaque peut orienter vers le haut cette déformation lorsque son coefficient de dilatation thermique est plus faible que celui du matériau formant la feuille de métal. Toutefois, si le diamètre de la plaque est trop important, il contribue aussi à amplifier cette déformation. C'est pourquoi des découpes peuvent être aménagées dans la plaque pour réduire cette déformation tel que divulgué dans le document FR2919484.

Cependant, l'utilisation répétée d'un tel récipient de cuisson sur une plaque de cuisson entraine des périodes de chauffe et de refroidissement successives du fond qui peuvent parvenir à décoller la plaque de la feuille de métal. En effet, la plaque et la feuille de métal étant réalisées dans des matériaux différents, elles sont soumises lors de la chauffe et du refroidissement à des dilatations différentielles qui sollicitent les zones de maintien de la plaque sur la feuille. Ces sollicitations sont notamment plus élevées en périphérie de la plaque.

De plus, lors du lavage du récipient de cuisson au lave-vaisselle, les détergents utilisés corrodent les parties apparentes de la feuille de métal au niveau des perforations et parviennent petit à petit à décoller la plaque, notamment lorsque la feuille est en aluminium.

Le document FR2693894 apporte une amélioration en proposant un procédé pour fixer la plaque munie de perforations circulaires sur la feuille de métal par matriçage. Selon ce document, on façonne la plaque perforée de telle sorte que chaque perforation présente une lèvre conique et une extrémité de lèvre. On applique la plaque perforée ainsi façonnée sur la feuille de métal, les lèvres des perforations formant des proéminences dirigées vers la feuille de métal. On sertit, par matriçage, la plaque façonnée sur la feuille de métal, le redressement des lèvres et des extrémités de lèvre associé au fluage de matière de la feuille de métal dans les perforations réalisant un ancrage de la plaque sur la feuille de métal. Les perforations présentent ainsi un bord interne incliné de manière continue par rapport à la verticale. Un avantage de ce dispositif est la bonne nettoyabilité offerte par une surface de fond lisse dans la mesure ou les trous d'accroché de la plaque sont complètement remplis par la matière de la feuille de métal.

Cependant, un récipient de cuisson issu d'un tel procédé présente une plaque munie de perforations d'accroché dans la feuille de métal uniquement circulaires. On peut caractériser la performance de la liaison de la plaque sur la feuille de métal par le rapport de la longueur des perforations d'accroché sur la surface de la grille hors découpe. La longueur des perforations d'accroché correspond à la somme des périmètres de l'ensemble des perforations d'accroché. Le nombre de perforations d'accroché est bien évidemment un paramètre de conception majeur qui conditionne la tenue de la plaque. Ces perforations étant réalisées par découpe, un espace minimal est nécessaire pour assurer le maintien du métal pendant l'opération de découpe. Localement, cette distance peut être abaissée à 3mm. Cette valeur conditionne le nombre de perforations maximum que peut contenir une surface de plaque donnée. La demanderesse a mis en évidence que, pour des perforations circulaires, le rapport de la longueur des perforations d'accroché sur la surface de la grille hors découpe est au maximum égal à 0.84mm/mm2. Il est bien évident que plus ce rapport est élevé, meilleure est la tenue de la plaque.

Cependant, un tel rapport peut être, dans certains cas, insuffisant pour garantir une bonne tenue de la plaque.

Il est également connu de combiner des perforations d'accroché circulaires avec des découpes décoratives ou anti-déformation présentant des bords droits telles que divulguées dans le document FR2919484.

Cependant, de telles découpes décoratives ou anti-déformation participent très peu à la tenue de la plaque sur la feuille de métal. De plus, des déformations thermoplastiques sont constatées sur la périphérie de ces découpes, qui tendent à disjoindre les deux pièces, ce qui provoque des zones d'encrassement.

Le but de la présente invention est de remédier aux inconvénients précités et de proposer un récipient de cuisson qui soit durable dans le temps et qui puisse être utilisé en toute sécurité.

Un autre but de l'invention est de proposer un récipient de cuisson présentant un fond esthétique.

Un autre but de l'invention est de proposer un récipient de cuisson de conception simple et économique à mettre en oeuvre.

Ces buts sont atteints avec un récipient de cuisson tel que décrit par la revendication 1 étant réalisé à partir d'une feuille de métal ou d'alliage léger emboutie, comportant un fond destiné à être disposé horizontalement sur une plaque de cuisson, un brûleur ou analogue, ledit fond comportant une plaque réalisée en un métal ou alliage ayant des propriétés mécaniques, thermiques, physiques différentes et notamment une limite élastique plus élevée que celle du métal ou alliage de ladite feuille, ladite plaque comprenant des perforations d'accroché et étant encastrée dans ledit fond par une opération de frappe de manière à ce que les perforations soient remplies de matière de la feuille, lesdites perforations comprenant un bord interne incliné de manière continue d'un angle compris entre 10 et 60° par rapport à la verticale, caractérisé en ce que au moins une perforation d'accroché présente une forme non circulaire comportant au moins une partie allongée.

Ainsi, le fond du récipient de cuisson comporte une plaque qui présente au moins une perforation décorative ou anti-déformation dont le bord interne incliné fait que la perforation participe à la tenue de la plaque sur la feuille de métal de manière plus importante qu'une perforation identique dont le bord interne est droit. Le bord interne incliné forme une pointe dirigée vers l'intérieur de la perforation pour réaliser un ancrage sûr en queue d'aronde.

Avantageusement, la partie allongée s'étend radialement au fond.

Par la partie allongée s'étend radialement au fond, on comprend que la partie allongée s'étend dans une direction majoritairement radiale par rapport au fond. Cette disposition permet de réaliser notamment des perforations anti-déformations.

De préférence, la partie allongée s'étend perpendiculairement à un rayon du fond.

De préférence, la forme non circulaire de la perforation d'accroché est dissymétrique.

Cette disposition permet de réaliser un décor qui participe à la tenue de la plaque sur la feuille de métal.

Avantageusement, la perforation d'accroché présente une forme de lettre.

Cette disposition permet de réaliser un marquage qui participe à la tenue de la plaque sur la feuille de métal.

Ainsi, on peut agencer plusieurs perforations en forme de lettre cote à cote pour former un mot sans disposer autour de chaque lettre des perforations d'accroché circulaires qui rendraient le mot peu lisible. En conséquence, on obtient un fond durable et esthétique avec une nettoyabilité améliorée.

Cette disposition permet également de réaliser des marquages sur des plaques de petit diamètre.

Selon l'invention, la perforation d'accroché comprend une partie présentant un bord interne incliné d'un angle α₁ par rapport à la verticale et une partie présentant un bord interne incliné d'un angle α₂ par rapport à la verticale, α₁ étant différent de α₂. Les matériaux de la plaque et de la feuille de métal étant différents, ils sont soumis lors de la chauffe et du refroidissement à des dilatations différentielles qui sont notamment plus élevées en périphérie de la plaque.

Cette disposition permet de favoriser la tenue de la plaque dans une zone très sollicitée, notamment en périphérie de la plaque, en donnant à l'angle une valeur plus élevée que dans une zone moins sollicitée.

Avantageusement, tous les bords internes des perforations sont inclinés d'un angle compris entre 10 et 60° par rapport à la verticale.

Ainsi chaque bord interne de chaque perforation participe à un ancrage maximum de la plaque dans le fond.

Avantageusement, la plaque comporte un bord périphérique incliné d'un angle pouvant varier de 10 à 60° par rapport à la verticale, ledit bord périphérique définissant une longueur d'accroche Lₚ.

Cette disposition permet d'améliorer le maintien de la plaque sur la feuille de métal, dans une zone fortement sollicitée.

De préférence, l'intégralité du bord périphérique de la plaque est incliné d'un angle compris entre 10 et 60° par rapport à la verticale.

Ainsi tout le bord périphérique de la plaque participe à l'ancrage de la plaque dans le fond. Cette disposition permet d'obtenir une résistance maximum à l'arrachement de la plaque.

Avantageusement, chaque perforation présente un périmètre définissant une longueur d'accroche Lₐ, la plaque présente une surface hors découpe S et le rapport R = (ΣLₐ + Lₚ)/S > 1mm/mm².

Cette disposition permet d'améliorer le rapport R d'environ 20% par rapport aux récipients de cuisson connus et ainsi, d'améliorer la résistance à l'arrachement de la plaque.

Avantageusement, le fond présente une première surface externe et la plaque présente une deuxième surface externe, les première et deuxième surfaces externes étant dans un même plan.

Cette disposition permet d'obtenir un fond plat très facile à nettoyer, en considérant que les perforations d'accroche sont remplies de matière de la feuille.

De préférence, le récipient de cuisson est une poêle, une casserole, une sauteuse, un faitout ou un autocuiseur.

L'invention sera mieux comprise à l'étude du mode de réalisation pris à titre nullement limitatif et illustré dans les figures annexées dans lesquelles :
- la figure 1 illustre une vue schématique en perspective d'un récipient de cuisson selon un mode particulier de réalisation de l'invention,
- la figure 2 illustre une vue en coupe du récipient de cuisson illustré à la figure 1,
- la figure 3 illustre une vue en coupe partielle de détail III de la plaque et de la feuille de métal avant frappe du récipient de cuisson illustré à la figure 1,
- la figure 4 illustre une vue de détail III en perspective du récipient de cuisson illustré à la figure 2,
- la figure 5 illustre la vue en coupe suivant le plan de coupe IV du récipient de cuisson de la figure 2,
- la figure 6 illustre une vue schématique en perspective d'un récipient de cuisson selon un mode particulier de réalisation de l'invention,
- la figure 7 illustre une vue de détail en perspective suivant le plan de coupe VII du récipient de cuisson illustré à la figure 6.

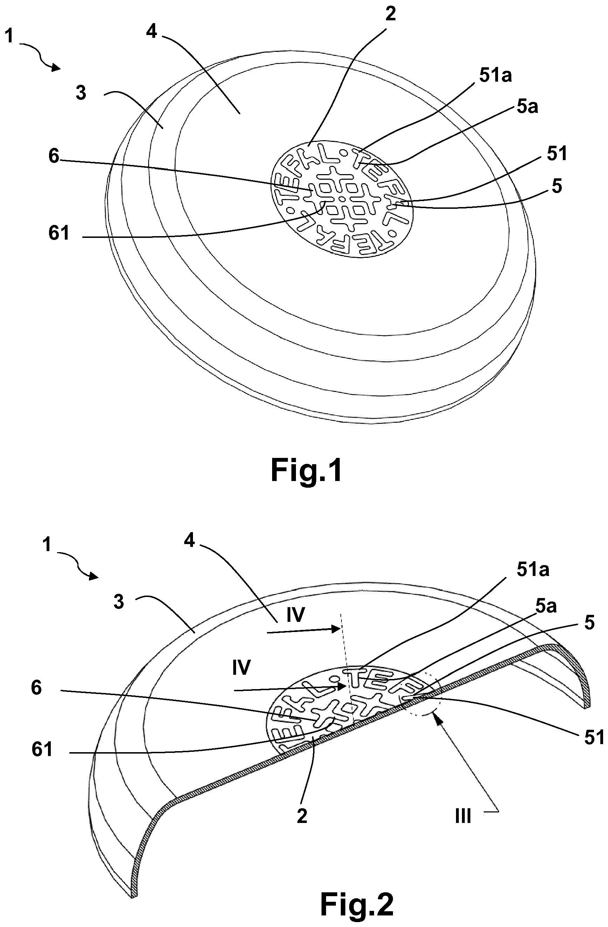

Selon un mode de réalisation visible aux figures 1 et 2, un récipient de cuisson 1 est constitué par une poêle. La poêle comporte une poignée de préhension non représentée sur les figures. Le récipient de cuisson 1 est réalisé à partir d'une feuille 3 en métal ou alliage léger, tel que de l'aluminium, en forme de disque. Ce disque est embouti d'une manière bien connue par l'homme du métier, pour former le récipient de cuisson 1 qui comporte un fond 4 destiné à être disposé sur une plaque de cuisson ou un brûleur. De préférence, le disque est en aluminium d'épaisseur comprise entre 2 et 6mm.

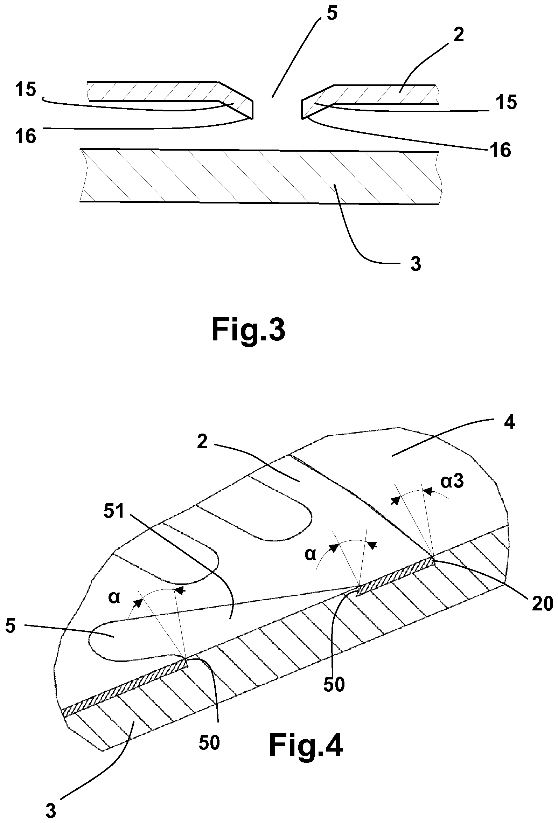

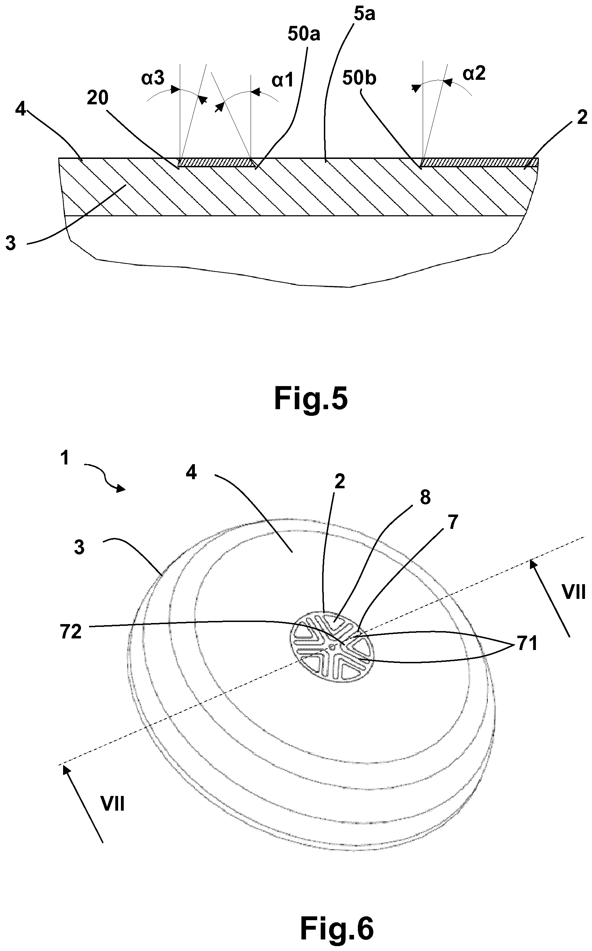

Le fond 4 comporte dans sa partie centrale, une plaque 2 en métal ou alliage ayant des propriétés différentes du métal ou alliage de la feuille 3, notamment dont la limite élastique est significativement plus élevé que celle de l'aluminium. La plaque 2 est, comme on le voit sur les figures 4 et 5, encastrée dans le métal de la feuille 3. La plaque 2 est de préférence en acier inoxydable ou en cuivre.

De préférence, la plaque 2 a la forme d'un disque. Toutefois, la plaque 2 pourrait avoir d'autres formes, notamment une forme polygonale, ou celle d'un anneau. La plaque 2 pourrait éventuellement être divisée en plusieurs secteurs. La plaque 2 comporte des perforations 5, 5a présentant des formes de lettres, agencées cote à cote pour constituer un marquage. Avantageusement, le marquage est réalisé suivant un arc de cercle à la périphérie de la plaque 2. La plaque 2 comporte des perforations 6 décoratives, notamment en forme de croix, comportant une partie allongée 61.

Tel que visible aux figures 3 et 4, la perforation 5 en forme de lettre présente un bord interne 50 incliné de manière continue d'un angle α par rapport à la verticale. Par bord interne, on comprend que le bord s'étend sur tout le périmètre de la perforation. La perforation 5 présente une forme comportant une partie allongée 51. Les autres perforations décoratives 6 présentent également un bord interne incliné similaire (cf. Fig.2).

Tel que visible à la figure 3, pour réaliser ce bord interne 50 incliné, on façonne la plaque 2 de telle sorte que chaque perforation 5, 6 présente une lèvre 15 périphérique inclinée et une extrémité 16 de lèvre. On applique la plaque 2 perforée ainsi façonnée sur la feuille 3 de métal, les lèvres 15 périphériques des perforations formant des proéminences dirigées vers la feuille de métal. La plaque 2 est encastrée dans la plaque 3 par frappe à froid, comme décrit dans le document FR2693894. Lors de la frappe, le redressement des lèvres 15 périphériques et des extrémités 16 de lèvre associé au fluage de matière de la feuille 3 de métal dans les perforations 5, 6 réalise un ancrage de la plaque 2 sur la feuille 3 de métal. L'extrémité 16 de lèvres une fois redressée forme le bord interne 50 incliné de la perforation. Ainsi, chaque perforation 5, 6 présente un périmètre définissant une longueur d'accroche Lₐ.

Tel que visible aux figures 2 et 5, la plaque 2 comprend une perforation 5a en forme de T. La perforation 5a comporte un bord interne 50a, 50b incliné d'un angle variable par rapport à la verticale en fonction de sa position sur le périmètre de la perforation 5. La perforation 5a en forme de T comporte une partie allongée 51a constituant une barre supérieure qui comprend un bord interne 50a radial externe et un bord interne 50b radial interne. Le bord interne 50a radial externe est incliné d'un angle α₁ par rapport à la verticale et le bord interne 50b radial interne est incliné d'un angle α₂ par rapport à la verticale. L'angle α₁ est supérieur à l'angle α₂ et permet d'obtenir une meilleure accroche de la plaque dans une zone externe plus sollicitée lors des chauffes/refroidissements successifs.

La plaque 2 a une forme de disque et comporte un bord périphérique 20 incliné de manière continue d'un angle α₃ (Fig.4 et 5) par rapport à la verticale. Le bord périphérique 20 définit sur le périmètre de la plaque 2 une longueur d'accroche Lₚ.

Tel que visible à la figure 1, le rapport de la somme des longueurs d'accroche Lₐ des perforations 5, 5a, 6 présentes sur la plaque et de la longueur d'accroche Lₚ du bord périphérique 20 sur la surface de la plaque 2 hors découpe est égal à 1,02mm/mm². Ce rapport est d'environ 20% supérieur au rapport obtenu pour une plaque ne comprenant que des perforations circulaires d'accroche agencées pour obtenir une somme de longueurs d'accroche maximum.

Dans une réalisation particulière, la poêle 1 présente un diamètre extérieur de 260 millimètres. La plaque prend la forme d'un disque de diamètre 55 millimètres et d'épaisseur 0,5 millimètre. Le matériau de la plaque est du cuivre.

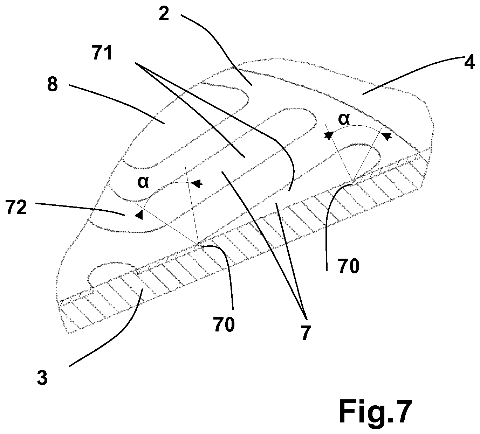

Le récipient de cuisson 1 illustré aux figures 6 et 7 comporte un fond 4 muni d'une plaque 2 assurant une fonction anti-déformation. Tel que divulgué dans le document FR2919484, pendant la chauffe, le fond du récipient de cuisson se bombe et la plaque peut orienter vers le haut cette déformation lorsque son coefficient de dilatation thermique est plus faible que celui du matériau formant la feuille de métal. Toutefois, si le diamètre de la plaque est important, il contribue aussi à amplifier cette déformation. C'est pourquoi des découpes peuvent être aménagées dans la plaque pour réduire cette déformation. Dans le mode de réalisation illustré aux figures 6 et 7, la plaque 2 comporte cinq perforations 7 d'accroche comportant deux parties allongées 71 radiales et une partie centrale 72 reliant les parties allongées 71 radiales. Les perforations 7 d'accroche présentent un bord interne 70 incliné de manière continue d'un angle α par rapport à la verticale. La plaque 2 comporte également cinq perforations 8 d'accroche de forme triangulaire, agencées en périphérie de la plaque 2. Ainsi, la surface des perforations 7, 8 d'accroché, créant des ajours dans la plaque 2, est importante et permet de ne pas amplifier la déformation du fond 4 lors de la chauffe.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention telle que définie par les revendications.

Dans une autre variante de réalisation, le bord interne incliné est discontinu sur le périmètre de la perforation.

## Revendications

1. Récipient de cuisson (1) réalisé à partir d'une feuille (3) de métal ou d'alliage léger emboutie, comportant un fond (4) destiné à être disposé horizontalement sur une plaque de cuisson, un brûleur ou analogue, ledit fond (4) comportant une plaque (2) réalisée en un métal ou alliage ayant des propriétés mécaniques, thermiques, physiques différentes et notamment une limite élastique plus élevée que celle du métal ou alliage de ladite feuille (3), ladite plaque (2) comprenant des perforations (5, 5a, 6) d'accroche et étant encastrée dans ledit fond (4) par une opération de frappe de manière à ce que les perforations (5, 5a, 6, 7) d'accroche soient remplies de matière de la feuille (3), lesdites perforations (5, 5a, 6, 7) d'accroche comprenant un bord interne (50, 70) qui s'étend sur tout le périmètre de la perforation, qui est incliné de manière continue d'un angle compris entre 10 à 60° par rapport à la verticale et qui forme une pointe dirigée vers l'intérieur de la perforation pour réaliser un ancrage sûr en queue d'aronde, **caractérisé en ce que** au moins une perforation (5, 5a, 6, 7) d'accroche présente une forme non circulaire comportant au moins une partie allongée (51, 51a, 61, 71) et **en ce que** la perforation (5a) d'accroche comprend une partie présentant un bord interne (50a) incliné d'un angle α1 par rapport à la verticale et une partie présentant un bord interne (50b) incliné d'un angle α2 par rapport à la verticale, α1 étant différent de α2.

2. Récipient de cuisson (1) selon la revendication 1, **caractérisé en ce que** la partie allongée (51, 61, 71) s'étend radialement au fond.

3. Récipient de cuisson (1) selon l'une quelconque des revendications 1 à 2, **caractérisé en ce que** la partie allongée (51a) s'étend perpendiculairement à un rayon du fond (4).

4. Récipient de cuisson (1) selon l'une quelconque des revendications 1 à 3, **caractérisé en ce que** la forme non circulaire de la perforation (5) d'accroche est dissymétrique.

5. Récipient de cuisson (1) selon l'une quelconque des revendications 1 à 4, **caractérisé en ce que** la perforation d'accroche (5, 5a) présente une forme de lettre.

6. Récipient de cuisson (1) selon l'une quelconque des revendications 1 à 5, **caractérisé en ce que** tous les bords internes des perforations (5, 5a, 6, 7) sont inclinés d'un angle compris entre 10 et 60° par rapport à la verticale.

7. Récipient de cuisson (1) selon l'une quelconque des revendications 1 à 6, **caractérisé en ce que** la plaque (2) comporte un bord périphérique (20) incliné d'un angle pouvant varier de 10 à 60° par rapport à la verticale, ledit bord périphérique (20) définissant une longueur d'accroche Lₚ.

8. Récipient de cuisson (1) selon la revendication 7, **caractérisé en ce que** l'intégralité du bord périphérique (20) de la plaque (2) est incliné d'un angle compris entre 10 et 60° par rapport à la verticale.

9. Récipient de cuisson (1) selon la revendication 7 ou 8, **caractérisé en ce que** chaque perforation (5, 5a, 6) présente un périmètre définissant une longueur d'accroche Lₐ, **en ce que** la plaque (2) présente une surface hors découpe S et **en ce que** le rapport R = (ΣLₐ + Lₚ)/S > 1mm/mm².

10. Récipient de cuisson (1) selon l'une quelconque des revendications 1 à 9, **caractérisé en ce que** le fond (4) présente une surface externe et la plaque (2) présente une surface externe, les surfaces externes étant dans un même plan.

11. Récipient de cuisson (1) selon l'une quelconque des revendications 1 à 10, **caractérisé en ce qu'**il est une poêle, une casserole, une sauteuse, un faitout ou un autocuiseur.

## Patentansprüche

1. Kochgefäß (1), das aus einem tiefgezogenen Blech (3) aus Metall oder einer Leichtmetalllegierung erstellt ist, das einen Boden (4) aufweist, der dazu bestimmt ist, horizontal auf einer Kochplatte, einem Brenner oder dergleichen angeordnet zu werden, wobei der Boden (4) eine Platte (2) aufweist, die aus einem Metall oder einer Legierung hergestellt ist, die unterschiedliche mechanische, thermische, physikalische Eigenschaften und insbesondere eine Streckgrenze aufweist, die höher als jene des Metalls oder der Legierung des Blechs (3) ist, wobei die Platte (2) Perforationen (5, 5a, 6) zum Einhaken aufweist und in dem Boden (4) durch einen Schlagvorgang derart eingefügt ist, dass die Perforationen (5, 5a, 6, 7) zum Einhaken mit Material des Blechs (3) gefüllt sind, wobei die Perforationen (5, 5a, 6, 7) zum Einhaken eine Innenkante (50, 70) aufweisen, die sich über den gesamten Umfang der Perforation erstreckt, die gleichmäßig um einen Winkel zwischen 10 und 60° in Bezug auf die Vertikale geneigt ist, und die eine Spitze bildet, die zur Innenseite der Perforation gerichtet ist, um eine sichere Schwalbenschwanzverankerung zu erstellen,
**dadurch gekennzeichnet, dass** mindestens eine Perforation (5, 5a, 6, 7) zum Einhaken eine nicht kreisförmige Form aufweist, die mindestens einen länglichen Teil (51, 51a, 61, 71) aufweist, und dadurch, dass die Perforation (5a) zum Einhaken einen Teil, der eine Innenkante (50a) aufweist, die um einen Winkel α1 in Bezug auf die Vertikale geneigt ist, und einen Teil aufweist, der eine Innenkante (50b) aufweist, die um einen Winkel α2 in Bezug auf die Vertikale geneigt ist, wobei α1 von α2 verschieden ist.

2. Kochgefäß (1) nach Anspruch 1, **dadurch gekennzeichnet, dass** sich der längliche Teil (51, 61, 71) radial am Boden erstreckt.

3. Kochgefäß (1) nach einem der Ansprüche 1 bis 2, **dadurch gekennzeichnet, dass** sich der längliche Teil (51a) senkrecht zu einem Bodenradius (4) erstreckt.

4. Kochgefäß (1) nach einem der Ansprüche 1 bis 3, **dadurch gekennzeichnet, dass** die nicht kreisförmige Form der Perforation (5) zum Einhaken asymmetrisch ist.

5. Kochgefäß (1) nach einem der Ansprüche 1 bis 4, **dadurch gekennzeichnet, dass** die Perforation (5, 5a) zum Einhaken eine Form eines Buchstabens aufweist.

6. Kochgefäß (1) nach einem der Ansprüche 1 bis 5, **dadurch gekennzeichnet, dass** alle Innenkanten der Perforationen (5, 5a, 6, 7) um einen Winkel in Bezug auf die Vertikale geneigt sind, der zwischen 10 und 60° beträgt.

7. Kochgefäß (1) nach einem der Ansprüche 1 bis 6, **dadurch gekennzeichnet, dass** die Platte (2) eine Umfangskante (20) aufweist, die um einen Winkel in Bezug auf die Vertikale geneigt ist, der zwischen 10 und 60° variieren kann, wobei die Umfangskante (20) eine Länge zum Einhaken Lₚ definiert.

8. Kochgefäß (1) nach Anspruch 7, **dadurch gekennzeichnet, dass** die Gesamtheit der Innenkante (20) der Platte (2) um einen Winkel in Bezug auf die Vertikale geneigt ist, der zwischen 10 und 60° beträgt.

9. Kochgefäß (1) nach Anspruch 7 oder 8, **dadurch gekennzeichnet, dass** jede Perforation (5, 5a, 6) einen Umfang aufweist, der eine Länge zum Einhaken Lₐ definiert, dadurch, dass die Platte (2) eine Fläche außerhalb des Ausschnitts S aufweist und dadurch, dass das Verhältnis R = (ΣLₐ + Lₚ)/S > 1mm/mm² ist.

10. Kochgefäß (1) nach einem der Ansprüche 1 bis 9, **dadurch gekennzeichnet, dass** der Boden (4) eine Außenfläche aufweist und die Platte (2) einen Außenfläche aufweist, wobei sich die Außenflächen in einer gleichen Ebene befinden.

11. Kochgefäß (1) nach einem der Ansprüche 1 bis 10, **dadurch gekennzeichnet, dass** es eine Pfanne, ein Topf, eine Bratpfanne, ein Schmortopf oder ein Schnellkochtopf ist.

## Claims

1. Cooking vessel (1) made from a metal sheet (3) or stamped light alloy, comprising a base (4) intended to be arranged horizontally on a hob, a burner or similar, said base (4) comprising a plate (2) made of a metal or alloy having different mechanical, thermal, physical properties, and in particular, an elastic limit higher than that of the metal or alloy of said sheet (3), said plate (2) comprising fastening perforations (5, 5a, 6) and being embedded in said base (4) by a coining operation such that the fastening perforations (5, 5a, 6, 7) are filled with material of the sheet (3), said fastening perforations (5, 5a, 6, 7) comprising an inner edge (50, 70) which extends over the whole of the perimeter of the perforation, which is tilted continuously by an angle of between 10 and 60° with respect to the vertical and which forms a tip directed towards the inside of the perforation to produce a secure, dovetailed anchoring, **characterised in that** at least one fastening perforation (5, 5a, 6, 7) has a non-circular shape comprising at least one extended part (51, 51a, 61, 71) and **in that** the fastening perforation (5a) comprises a part having an inner edge (50a) tilted by an angle α1 with respect to the vertical and a part having an inner edge (50b) tilted by an angle α2 with respect to the vertical, α1 being different from α2.

2. Cooking vessel (1) according to claim 1, **characterised in that** the extended part (51, 61, 71) extends radially to the base.

3. Cooking vessel (1) according to any one of claims 1 to 2, **characterised in that** the extended part (51a) extends perpendicularly to a radius of the base (4).

4. Cooking vessel (1) according to any one of claims 1 to 3, **characterised in that** the non-circular shape of the fastening perforation (5) is dissymmetrical.

5. Cooking vessel (1) according to any one of claims 1 to 4, **characterised in that** the fastening perforation (5, 5a) has a letter shape.

6. Cooking vessel (1) according to any one of claims 1 to 5, **characterised in that** all the inner edges of the perforations (5, 5a, 6, 7) are tilted by an angle of between 10 and 60° with respect to the vertical.

7. Cooking vessel (1) according to any one of claims 1 to 6, **characterised in that** the plate (2) comprises a peripheral edge (20) tilted by an angle which could vary from 10 to 60° with respect to the vertical, said peripheral edge (20) defining a fastening length Lₚ.

8. Cooking vessel (1) according to claim 7, **characterised in that** all of the peripheral edge (20) of the plate (2) is tilted by an angle of between 10 and 60° with respect to the vertical.

9. Cooking vessel (1) according to claim 7 or 8, **characterised in that** each perforation (5, 5a, 6) has a perimeter defining a fastening length Lₐ, **in that** the plate (2) has a surface exclusive of cut-out S and **in that** the ratio R = (ΣLₐ + Lₚ)/S > 1mm/mm².

10. Cooking vessel (1) according to any one of claims 1 to 9, **characterised in that** the base (4) has an outer surface and the plate (2) has an outer surface, the outer surfaces being in one same plane.

11. Cooking vessel (1) according to any one of claims 1 to 10, **characterised in that** it is a frying pan, a saucepan, a pan, a stewpot or a steamer.
